# EUROPEAN PATENT APPLICATION

(11) **EP 1 898 613 A1**
(43) Date of publication of application: **12.03.2008**
(21) Application number: 06425625.8
(22) Date of filing: 11.09.2006
(51) Int. Cl.: H04M 1/27, H04M 1/56, H04Q 7/22

(54) **Method and device for selecting a message recipient from a call history list**

(71) Applicant: Motorola, Inc., Schaumburg, IL 60196 (US)
(72) Inventor: Fessa, Flavio, 10121 Torino (IT); Cambursano, Enrico, 10146 Torino (IT)
(74) Representative: Iannone, Carlo Luigi

(57) **Abstract**

Disclosed are methods in a wireless communication device and devices to allow a user to access a call history list from a message editor of the device. The method includes storing contact information, such as a telephone number in a call history list. The method also includes initiating composing a messaging service message, for example in the message editor of the device. From the message editor, the method includes providing a list of possible recipients for the messaging service message, the list of possible recipients being from the call history list. A user can indicate a selection, so that the method further includes selecting, from the list of possible recipients, at least one recipient for the messaging service message, and sending the messaging service message to the at least one recipient.

## Description

### FIELD

Disclosed are methods in a wireless communication device and devices to allow a user to access a call history list from a message editor of the device, and more particularly to select a recipient of a text message from a call history list.

### BACKGROUND

As more features are added to mobile communication devices, the convenience of the technology has made wireless communication increasingly popular. In addition to voice communication, wireless communication devices such as cellular telephones may receive and transmit text messages, similar to email. Text messages, such as those sent through a short messaging service (SMS) are input to the device, for example through the keypad of the device, and then stored for transmission. Users may save valuable cellular minutes by communicating through text messages since they are small files and take little time to transmit over a cellular network.

To prepare and send a message from a mobile communication device, a user can enter the message and select a recipient from a contact list, such as a phone book, stored in memory of the device. The contact list typically contains contact entries stored in the memory of the device by the user. Additionally, contact list entries may be default contact information such as emergency numbers. Also, certain other contact list entries can be downloaded to the device from a different device into the contact list. A user may also manually enter a number for a recipient or may select a number from a list of numbers that are identified as not being in the contact list, such as on the Sony/Ericsson T68i.

The call history list is a separate list from the contact list. The call history list may separately include entries for outgoing calls and entries for incoming calls. The entries for incoming calls may include answered and missed incoming calls. The call history list may include numbers that are also in the contact list and numbers that are not in the contact list. There is no access from a message editor to the call history list. If a user wishes to send a message from the message editor to the telephone number of an entry in a call history list, the user manually enters the telephone number into the input device such as a keypad. It would be beneficial if a user could instead access the call history list from the message editor.

### SUMMARY

Disclosed are methods in a wireless communication device and devices to allow a user to access a call history list from a message editor of the device. A method includes storing entries including telephone numbers in a call history list. More particularly, the method includes engaging in a telecommunication attempt with another communication device and adding the telephone number of another communication device to a call history list in response to engaging in the telecommunication attempt. The method also includes initiating composing a messaging service message, for example in the message editor of the device. From the message editor, the method further includes providing a list of possible recipients for the messaging service message, the list of possible recipients being from the call history list. A user can indicate a selection, so that the method additionally includes selecting, from the list of possible recipients, at least one recipient for the messaging service message, and sending the messaging service message to the at least one recipient.

In another embodiment of methods of a mobile communication device and devices, a user can select at least one recipient from the call history list and/or from the contact list. The method also includes initiating composing a messaging service message, for example in the message editor of the device. While in the message editor, the method includes providing a list of possible recipients for the messaging service message, the list of possible recipients being from the call history list and/or the contact list.

### BRIEF DESCRIPTION OF THE DRAWINGS

FIG. 1 depicts an embodiment of a wireless communication device, and in particular, a cellular telephone.
FIG. 2 is a flowchart of an embodiment of a method in a wireless communication device; and
FIG. 3 illustrates call history lists and a contact list as they might appear on the display of the mobile communication device.

### DETAILED DESCRIPTION

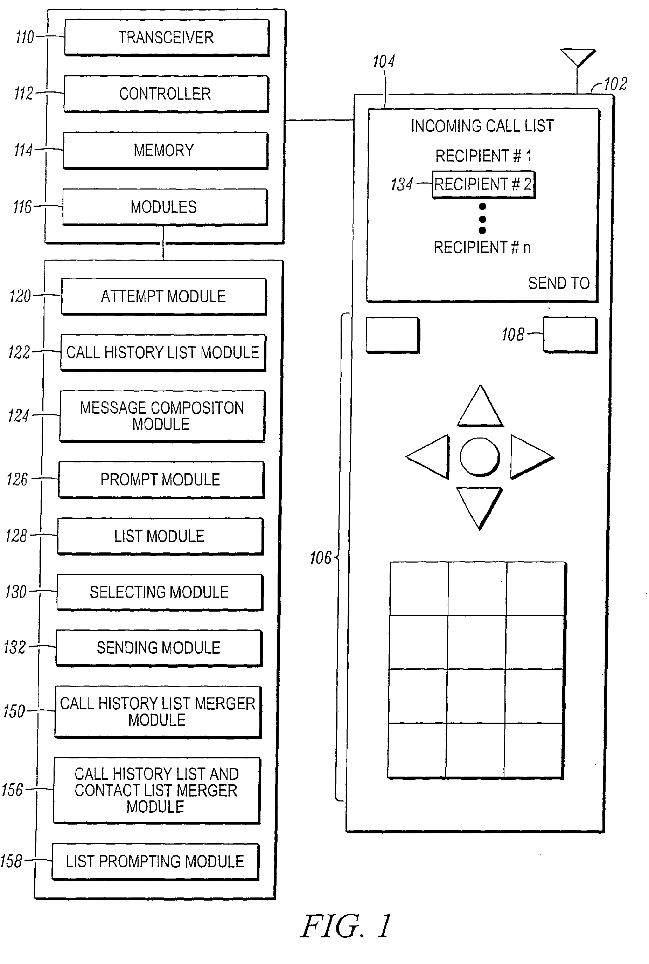

FIG. 1 depicts an embodiment of a wireless communication device 102, and in particular, a cellular telephone. The mobile communication device 102 represents a wide variety of communication devices that have been developed for use within various networks. The mobile communication device 102 may be implemented as a cellular telephone (also called a mobile phone). Such handheld communication devices include, for example, cellular telephones, messaging devices, personal digital assistants (PDAs), notebook or laptop computers incorporating communication modems, mobile data terminals, application specific gaming devices, video gaming devices incorporating wireless modems, and the like. Any of these portable devices may be referred to as a mobile station or user equipment. Herein, wireless communication technologies may include, for example, voice communication, the capability of transferring digital data, SMS messaging, Internet access, multi-media content access and/or voice over internet protocol (VoIP).

Before describing in detail embodiments that are in accordance with the present disclosure, it should be observed that the embodiments reside primarily in combinations of method steps and components related to accessing a call history list from a message editor to select a recipient of a text message from the call history list. Accordingly, the components and method steps have been represented where appropriate by conventional symbols in the drawings, showing only those specific details that are pertinent to understanding the embodiments of the present disclosure so as not to obscure the disclosure with details that will be readily apparent to those of ordinary skill in the art having the benefit of the description herein.

In this document, relational terms such as first and second, top and bottom, and the like may be used solely to distinguish one entity or action from another entity or action without necessarily requiring or implying any actual such relationship or order between such entities or actions. The terms "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus. An element proceeded by "comprises ...a" does not, without more constraints, preclude the existence of additional identical elements in the process, method, article, or apparatus that comprises the element.

It will be appreciated that embodiments of the disclosure described herein may be comprised of one or more conventional processors and unique stored program instructions that control the one or more processors to implement, in conjunction with certain non-processor circuits, some, most, or all of the functions of accessing a call history list from a message editor to select a recipient of a text message from the call history list, as described herein.

Indicia related to text messaging, such as SMS, and other display indicia may be displayed on the display device 104. The electronic device 102 can include a text message editor to enter the text message. The electronic device 102 includes input capability such as a key pad 106 that can include a soft key 108. A text message also may be input to the device 102 via audio input and displayed on display device 104. The device can further include at least one transmitter and receiver 110, a controller 112, a memory 114, and modules 116 that can contain instruction modules that are hardware or software. The modules can carry out certain processes of the methods as described herein. The modules can be implemented in software, such as in the form of one or more sets of prestored instructions, and/or hardware, which can facilitate the operation of the mobile station or electronic device as discussed below. The modules may be installed at the factory or can be installed after distribution by, for example, a downloading operation. The operations in accordance with the modules will be discussed in more detail below.

To transmit a text message, one or more transceivers 110 may communicate with communication networks, including those used to transmit digital data through radio frequency links. The links may be between two or more devices, through radio towers or any other configuration. Examples of communication networks are telephone networks, messaging networks, and Internet networks. Such networks include land lines, radio links, and satellite links, and can be used for such purposes as cellular telephone systems, Internet systems, computer networks, messaging systems and satellite systems, singularly or in combination. The messaging service message can be for example, a short messaging service message (SMS), an enhanced messaging service message (EMS), and a multimedia messaging service message (MMS).

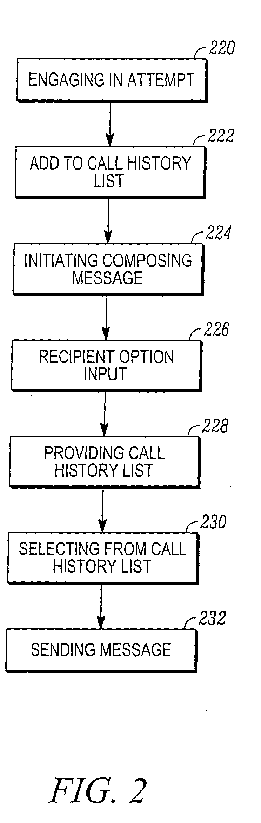

FIG. 2 is a flowchart of an embodiment of a method in a wireless communication device. The method to allow a user to access a call history list from a message editor of a mobile communication device can include engaging in a communication attempt 220 by either receiving a call or placing a call. Receiving a call can add an entry including a telephone number to the incoming call list. It is understood that an incoming call can include calls received from another communication device that are answered or that are missed. Placing a call to another communication device can add an entry including a telephone number to an outgoing call list whether the call is completed or not. Entries to the call history list further include any type of communication, for example, text messages, internet communication, and voice messages. In any event, engaging in a telecommunication attempt with another communication device in accordance, for example with an attempt module 120 (see FIG. 1) can result in adding the entry including the telephone number of another communication device to a call history list 222. The call history list module 122 (see FIG. 1) may store the entries in separate incoming and outgoing call history lists. As mentioned the call history list can be a separate outgoing call list or incoming call list, but can also be a combination of both or more lists.

In a message editor, a messaging service message composition can be initiated 224 by a message composition module 124 (see FIG. 1). As discussed above, a user may input a message in any manner and during the composition or at the end of the composition, the device may prompt to provide recipient option input 226, and/or may automatically or manually provide a list of possible recipients for the messaging service message 228, the list of possible recipients being from the call history list. Modules can include a prompt module including instructions for receiving a recipient option input 126 (see FIG. 1) and a list module 128 can include instructions for providing a list of possible recipients for the messaging service message, the list of possible recipients being from the call history list.

A user may provide input to the device for selecting, from the list of possible recipients, at least one recipient for the messaging service message 230 in accordance with selecting module 130 (see FIG. 1). The selection process is described in more detail below. The device can then send the messaging service message to the at least one recipient 232 in accordance with sending module 132 (see FIG. 1).

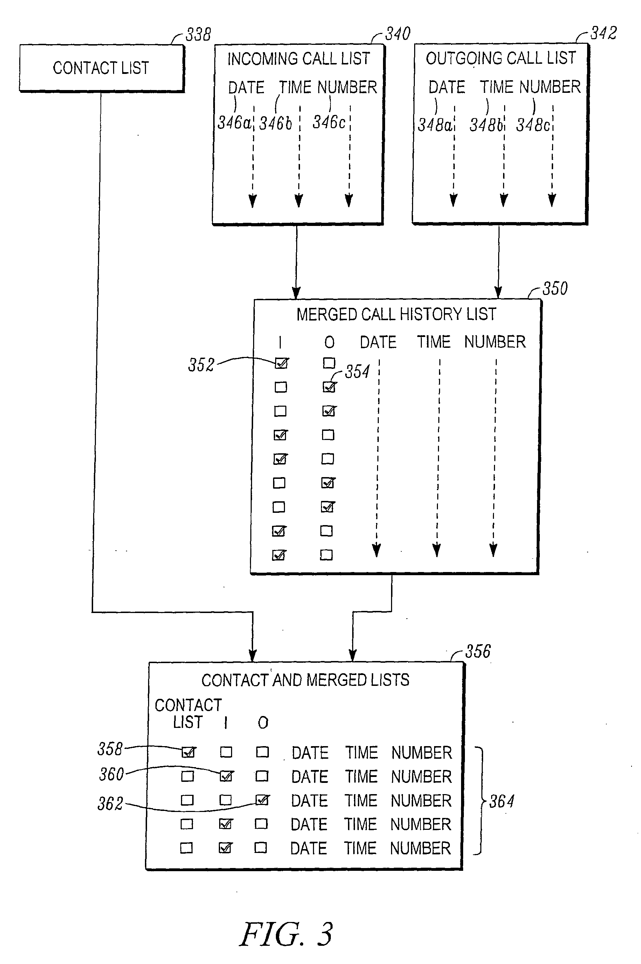

FIG. 3 illustrates different call history lists and a contact list as they might appear on the display 104 (see FIG. 1). As described above, different call history lists may include an incoming call list 340 and an outgoing call list 342 which may be displayed separately as illustrated. Each entry may include a date 346a and 348a, a time 346b and 348b and the telephone number 346c and 348c so that the user may recognize which entry to choose. In the event that the telephone number matches one in the contact list, additional information such as the name of the contact can be accessed or displayed as well. In another embodiment, if additional data is transmitted with the telephone number such as a contact name, the name of the contact may be accessed or displayed as well. Any manner to provide recognizability to the entries of the call history list is within the scope of this discussion.

The call history list can become populated by the user engaging in a telecommunication attempt 230 (see FIG. 2), which can include receiving an incoming call. That is, by receiving incoming communication attempts, an incoming communication list can be generated from received incoming communication attempts. The call history list also can become populated by the user engaging in a telecommunication attempt 230 which can include placing an outgoing call. By placing an outgoing communication attempt, an outgoing communication list can be generated from placed outgoing communication attempts. Furthermore, a contact list 338 can be stored from input received via an input device of the mobile communication device

In one embodiment, an end-user may be provided with two different lists for incoming and outgoing call lists separately to simplify the search of the recipient. For example, it may be that a majority of the time a recipient of messaging service message is listed in the contact list so the contact list may be presented to the end-user first. In this embodiment, if the recipient is not in the contact list, an "options" menu may be provided to find one or more possible recipients, the "options" menu providing an item for the outgoing call list and an item for the incoming call list.

In another embodiment, a prompt by the device 102 (see FIG. 1) to the user may ask to receive a list of options input by annunciating a menu of the incoming communication list, the outgoing communication list, and the contact list in accordance with list prompting module 158 (see FIG. 1). A user may therefore select from which list to select the recipient of the message.

In another embodiment, to reduce the number of lists through which a user may navigate, the incoming call list and the outgoing call list may be merged according to date and time of telecommunication attempts. The merged display 350 can include an indication of whether the entry is incoming 352 or outgoing 354. A list merger module 150 (see FIG. 1) can include instructions for merging the incoming call list with the outgoing call list according to date and time of telecommunication attempts in the call history list or any other criteria. In another embodiment, the contact list and one or more of the call history lists can be merged 356 according to a call history list and contact list merger module 156 (see FIG. 1) including instructions for merging the call history list and the contact list in an order according to a date and time of telecommunication attempts for each entry in the merged list. The merged display 356 can include an indication of whether an entry is from the contact list 358, the incoming call list 360, and/or the outgoing call list 362, the date and time 364, and can display and/or provide access to a name or other indicia associate with the entry.

In selecting 230 (see FIG. 2), from the list of possible recipients, at least one recipient for the messaging service message and then sending 232 (see FIG. 2) the message service message to the recipient, the navigation keys of the keypad 106 (see FIG. 1) can be used to highlight an intended recipient 134 (see FIG. 1). As discussed above, the user may use the message editor to generate a message. The user may select a recipient at any particular stage of the message composition from one of the lists illustrated in FIG. 3. It is understood that the displayed lists of FIG. 3 may take any suitable form and display and/or provide access to any suitable information. The actuation of a send-to soft key 108 (see FIG. 1) may be used to send a message via a short message service as described above. In this way, the described methods in a wireless communication device and devices can allow a user to access a call history list from a message editor of the device to select a recipient for the message, and send a text message to a recipient listed in a call history list.

This disclosure is intended to explain how to fashion and use various embodiments in accordance with the technology rather than to limit the true, intended, and fair scope and spirit thereof. The foregoing description is not intended to be exhaustive or to be limited to the precise forms disclosed. Modifications or variations are possible in light of the above teachings. The embodiment(s) was chosen and described to provide the best illustration of the principle of the described technology and its practical application, and to enable one of ordinary skill in the art to utilize the technology in various embodiments and with various modifications as are suited to the particular use contemplated. All such modifications and variations are within the scope of the disclosure as determined by the appended claims, as may be amended during the pendency of this application for patent, and all equivalents thereof, when interpreted in accordance with the breadth to which they are fairly, legally and equitably entitled.

In the foregoing specification, specific embodiments of the present disclosure have been described. However, one of ordinary skill in the art appreciates that various modifications and changes can be made without departing from the scope of the present disclosure as set forth in the claims below. Accordingly, the specification and figures are to be regarded in an illustrative rather than a restrictive sense, and all such modifications are intended to be included within the scope of present disclosure. The benefits, advantages, solutions to problems, and any element(s) that may cause any benefit, advantage, or solution to occur or become more pronounced are not to be construed as a critical, required, or essential features or elements of any or all the claims. The disclosure is defined solely by the appended claims including any amendments made during the pendency of this application and all equivalents of those claims as issued.

## Claims

1. A method in a wireless communication device, comprising:
engaging in a telecommunication attempt with another communication device;
adding the telephone number of the another communication device to a call history list in response to engaging in the telecommunication attempt;
initiating composing a messaging service message;
providing a list of possible recipients for the messaging service message, the list of possible recipients being from the call history list;
selecting, from the list of possible recipients, at least one recipient for the messaging service message; and
sending the messaging service message to the at least one recipient.

2. The method according to claim 1,
further comprising receiving a recipient option input,
wherein providing a list comprises providing the list of possible recipients in response to receiving the recipient option input.

3. The method according to claim 2, wherein the recipient option input comprises actuation of a send-to soft key.

4. The method according to claim 1, wherein the messaging service message comprises one selected from the group of a short messaging service message, an enhanced messaging service message, and a multimedia messaging service message.

5. The method according to claim 1, wherein the call history list comprises an outgoing call list and an incoming call list and the incoming call list is displayed separately from the outgoing call list.

6. The method according to claim 1, wherein the call history list comprises an outgoing call list and an incoming call list and the incoming call list is displayed merged with the outgoing call list according to date and time of telecommunication attempts in the call history list.

7. The method according to claim 1, wherein the call history list is displayed in an order according to a date and time of telecommunication attempts for each entry in the call history list.

8. The method according to claim 1, wherein engaging in a telecommunication attempt comprises one selected from the group of receiving an incoming call and placing an outgoing call.

9. A wireless communication device, comprising:
a controller configured to process instructions;
memory in communication with the controller;
a transceiver in communication with the controller;
an attempt module including instructions for engaging in a telecommunication attempt with another communication device;
a call history list module including instructions for adding the telephone number of the another communication device to a call history list in response to engaging in the telecommunication attempt;
a message composition module including instructions for initiating composing a messaging service message;
a list module including instructions for providing a list of possible recipients for the messaging service message, the list of possible recipients being from the call history list;
a selection module including instructions for selecting, from the list of possible recipients, at least one recipient for the messaging service message; and
a sending module including instructions for sending the messaging service message to the at least one recipient.

10. The device according to claim 9,
further comprising a prompt module including instructions for receiving a recipient option input,
wherein the list module for providing a list comprises providing the list of possible recipients in response to receiving the recipient option input.

11. The device according to claim 10, further comprising a send-to soft key configured to actuate the recipient option input.

12. The device according to claim 9, wherein the messaging service message comprises one selected from the group of a short messaging service message, an enhanced messaging service message, and a multimedia messaging service message.

13. The device according to claim 9, wherein the call history list comprises an outgoing call list and an incoming call list and the incoming call list is displayed separately from the outgoing call list.

14. The device according to claim 9, wherein the call history list comprises an outgoing call list and an incoming call, the device further comprising:
a list merger module including instructions for merging the incoming call list with the outgoing call list according to date and time of telecommunication attempts in the call history list.

15. The device according to claim 9, further comprising:
a call history list and contact list merger module including instructions for merging the call history list and the contact list in an order according to a date and time of telecommunication attempts for each entry in the merged list.

16. The device according to claim 9, wherein the attempt module including instructions for engaging in a telecommunication attempt with another communication device further comprises instructions for selecting one from a group of an incoming call list and an outgoing call list.

17. A method of a mobile communication device, comprising:
receiving incoming communication attempts;
generating an incoming communication list from received incoming communication attempts;
placing outgoing communication attempts;
generating an outgoing communication list from placed outgoing communication attempts;
storing a contact list from input received via an input device of the mobile communication device;
initiating composing a messaging service message;
prompting to receive a list option input by annunciating a menu of the incoming communication list, the outgoing communication list and the contact list;
prompting to receive a recipient option input by providing the list of possible recipients;
selecting, from the list of possible recipients, at least one recipient for the messaging service message according to the recipient option input; and
sending the messaging service message to the at least one recipient.

18. The method according to claim 17,
wherein the messaging service message comprises one selected from the group of a short messaging service message, an enhanced messaging service message, and a multimedia messaging service message.

19. The method according to claim 17, wherein the outgoing communication list and an incoming communication list is displayed merged according to date and time of communication attempts.

20. The method according to claim 17, wherein the recipient option input comprises actuation of a send-to soft key.
